# EUROPÄISCHE PATENTSCHRIFT

(11) **EP 2 108 503 B1**
(45) Veröffentlichungstag und Bekanntmachung des Hinweises auf die Patenterteilung: **24.03.2010**
(21) Anmeldenummer: 08006937.0
(22) Anmeldetag: 07.04.2008
(51) Int. Cl.: B29C 65/60, B29C 65/72

(54) **Befestigungselement für flächiges Fasermaterial und Verfahren zum Befestigen von flächigem Fasermaterial**
Fixing element for flat fibrous material and method for fixing flat fibrous material
Elément de fixation pour matériau en fibres plat et procédé de fixation de matériau en fibres plat

(43) Veröffentlichungstag der Anmeldung: 14.10.2009
(73) Patentinhaber: Sefar AG, 9410 Heiden (CH)
(72) Erfinder: Dür, Hansjörg, 6858 Schwarzach (AT)
(74) Vertreter: Wunderlich, Rainer

(56) Entgegenhaltungen:
- EP-A- 0 898 878
- DE-A1- 2 061 064
- DE-A1- 3 013 057
- DE-A1- 3 029 855
- DE-A1- 3 127 741
- DE-A1- 4 201 007
- GB-A- 2 134 013
- US-A- 2 935 434
- US-A- 4 367 111

## Beschreibung

Die Erfindung betrifft ein Befestigungselement für flächiges Fasermaterial gemäß dem Oberbegriff des Anspruchs 1. Ein solches Befestigungselement ist ausgebildet mit einem Grundelement, stiftförmigen Profilelementen, die zum Durchdringen des Fasermaterials an dem Grundelement vorstehen, und einem Deckelement, welches zum Anlegen an die Profilelemente des Grundelements vorgesehen ist, wobei an dem Deckelement ebenfalls stiftförmige Profilelemente zum Durchdringen des Fasermaterials vorstehen. Ein erfindungsgemäßes Befestigungselement ist also unter anderem ausgebildet mit einem Grundelement und stiftförmigen Profilelementen, die zum Durchdringen des Fasermaterials an dem Grundelement vorstehen. Die Erfindung betrifft ferner ein Verfahren zum Befestigen von flächigem Fasermaterial nach Anspruch 9.

Beispielsweise in der Filtrationstechnik ist es erforderlich, zum Filtrieren vorgesehene Textilelemente an Trägern oder sonstigen Halteeinrichtungen zu befestigen. Zu diesem Zweck ist aus der DE 44 32 004 A1 eine Vorrichtung zur Befestigung von Filtermedien auf Geräten und Apparaten bekannt. Die Vorrichtung weist zwei Profilleisten auf, zwischen denen das Filtermedium angeordnet wird. Die Profilleisten sind mit Nadeln und korrespondierenden Löchern versehen. Beim Verschließen der bekannten Befestigungsvorrichtung werden die beiden Profilleisten aneinander geschraubt. Dabei werden die Nadeln durch das Filtermedium gepresst, so dass das Filtermedium an den Nadeln fixiert wird. Beim weiteren Zusammenpressen treten die Nadeln schließlich an ihren Spitzen in die korrespondierenden Löcher ein.

Eine weitere Befestigungsvorrichtung für ein Filtertuch mit Nadeln und korrespondierenden Löchern, wobei die Nadeln zum Durchstechen des Filtertuchs vorgesehen sind, ist aus der EP 1 264 627 A1 bekannt.

In der nachveröffentlichten Europäischen Patentanmeldung mit dem Anmeldeaktenzeichen 06 023 832.6 ist ein weiterer mehrteiliger Halter für ein Filtermedium beschrieben, bei dem zum Halten des Filtermediums Haltedorne vorgesehen sind, welche das Filtermedium durchdringen. Diese Anmeldung lehrt, dass die Haltedorne außer zum Halten des Filtermediums auch zum Zusammenhalten der einzelnen Teile des Halters untereinander ausgebildet sein können. Hierfür können die Haltedorne beispielsweise stirnseitig ein Schnappelement aufweisen, das einen Schnappverschluss zwischen Haltergrundkörper und Halteraufsatz bildet.

Die DE 30 13 057 A1 betrifft eine Vorrichtung zum Verbinden von Gurtbändern als Nahtersatz. Gemäß einer ersten Ausführungsform können zwei Platten vorgesehen sein, auf denen jeweils Erhebungen vorgesehen sind. Im befestigten Zustand ist das Gurtband zwischen den beiden Platten angeordnet, wobei die Erhebungen durch Übereinanderpressen durch das Gurtband hindurchgedrungen sind und auf der Oberfläche der jeweils gegenüberliegenden Platte anliegen. Die beiden Platten werden in dieser Position durch separate Nieten gehalten. Gemäß einer weiteren Ausführungsform sind die beiden Platten einstückig aus einer Platine geformt, und auf der zweiten Platte sind Löcher angeordnet, welche die Spitzen der nadelförmig ausgestalteten Erhebungen der ersten Platte aufnehmen können.

Die DE 31 27 741 A1 betrifft ein Nietbefestigungs-Element, das aus einer mit einer Vielzahl von Nietstiften bestückten Platte sowie aus einer mit einer entsprechenden Anzahl von Löchern versehenen Gegenplatte besteht. Beim Zusammenpressen der beiden Platten durchdringen die Nietstifte das Gewebe und die Löcher der Gegenplatte. Die auf der Rückseite der Gegenplatte überstehenden Spitzen werden gestaucht.

Die US 4,367,111 lehrt ein Heftverfahren, bei dem Krampen durch ein Material getrieben werden und die Enden der Krampen anschließend derart umgeformt werden, dass die Krampen nicht aus dem Material entfernt werden können.

Die DE 30 29 855 A1 betrifft ein Verfahren zum Verbinden von Folien- oder Gewebebahnen mit einem Bauteil aus Kunststoff. Dabei wird ein aus thermoplastischem Material bestehendes Bauteil vorgesehen, welches in dem Bereich, in dem es mit der Folie verbunden werden soll, kegelige Spitzen aufweist. Nachdem die Folie in die gewünschte Lage zu den Spitzen gebracht ist, werden Folie und Spitzen von einer verfahrbaren Heizplatte unter Druck beaufschlagt. Sobald die Heizplatte an Folie und Spitzen herangefahren ist, wird die Heizung eingeschaltet. Die Folie wird dann teigig und die Spitzen durchdringen die Folie. Mit fortschreitender Erwärmung schmelzen die Spitzen ab und verformen sich unter dem Druck der ständig nachgeführten Heizplatte zu relativ großflächigen, flachen Nietköpfen.

**Aufgabe** der Erfindung ist es, ein Befestigungselement, insbesondere ein nichtmetallisches Befestigungselement, und ein Verfahren zum Befestigen von flächigem Fasermaterial anzugeben, die bei hoher Zuverlässigkeit besonders vielseitig einsetzbar sind und einen besonders geringen Montageaufwand mit sich bringen.

Die Aufgabe wird erfindungsgemäß durch ein Befestigungselement mit den Merkmalen des Anspruchs 1 und ein Verfahren mit den Merkmalen des Anspruchs 9 gelöst. Bevorzugte Ausführungsbeispiele sind in den jeweils abhängigen Ansprüchen angegeben.

Die erfindungsgemäße Vorrichtung ist dadurch gekennzeichnet, dass die Profilelemente des Grundelements und die Profilelemente des Deckelements zum Bilden von Halteköpfen für das Fasermaterial deformierbar sind, wobei die Profilelemente des Grundelements und die Profilelemente des Deckelements durch Verpressen des Grundelements mit dem Deckelement zu den Halteköpfen deformierbar sind.

Bei einem erfindungsgemäßen Befestigungselement ist unter anderem vorgesehen, dass die Profilelemente zum Bilden von Halteköpfen für das Fasermaterial deformierbar sind.

Ein Grundgedanke der Erfindung kann darin gesehen werden, am Grundelement eine Vielzahl von Profilelementen vorzusehen, die durch das zu haltende flächige Fasermaterial durchgetrieben werden. Im Anschluss oder während des Durchtreibens werden die Profilelemente so deformiert, dass an ihnen Halteköpfe für das durchdrungene Fasermaterial gebildet werden. Zum Bilden der Halteköpfe können die Profilelemente beispielsweise umgebogen und/oder aufgeweitet werden. Die Deformation der Profilelemente erfolgt geeigneterweise in den Stirnbereichen der Profilelemente, das heißt in den Endbereichen der Profilelemente, welche dem Grundelement abgewandt sind.

Nach dem Eindringen der stiftförmigen Profilelemente in das flächige Fasermaterial sind die Profilelemente von Fasern des Fasermaterials umgeben. Aufgrund dieser Anordnung sichern die Profilelemente das durchdrungene flächige Fasermaterial gegen eine laterale Bewegung relativ zum Grundelement. Die endseitigen Halteköpfe wirken dabei einem axialen Abrutschen des Fasermaterials von den Profilelementen entgegen, so dass in besonders einfacher Weise eine zuverlässige allseitige Befestigung gegeben ist.

Bei dem flächigen Fasermaterial kann es sich beispielsweise um ein Textilmaterial, insbesondere um ein Gewebe oder um ein Vlies handeln. Das Fasermaterial könnte grundsätzlich auch ein Papiermaterial sein. Vorzugsweise ist das Fasermaterial ein Filtermedium, beispielsweise ein Filtertuch. Das erfindungsgemäße Befestigungselement und das erfindungsgemäße Verfahren dienen zweckmäßigerweise zum Befestigen und/oder Herstellen eines Filters.

Für eine besonders einfache Montage sind die stiftförmigen Profilelemente durch Einbringen einer axial gerichteten Kraft zu den Halteköpfen deformierbar. Erfindungsgemäß ist vorgesehen, ein Gegenstück auf den stiftförmigen Profilelementen aufzulegen und die Halteköpfe durch Verpressen des Grundelementes mit dem Gegenstück zu bilden.

Zum Umformen der Profilelemente zu den Halteköpfen kann das Gegenstück korrespondierende Negativformen enthalten, die ihre Form den Profilelementen beim Deformieren aufprägen. Solche korrespondierenden Negativformen sind jedoch nicht zwingend erforderlich. Experimente haben gezeigt, dass auch eine ungerichtete Verformung der Profilelemente zum Bilden von Halteköpfen möglich ist, so dass die Fertigungswerkzeuge, insbesondere das Gegenstück, besonders einfach gehalten werden können. Insbesondere kann das Gegenstück an seiner Anlagefläche an den Profilelementen eben ausgebildet sein.

Für eine besonders einfache Handhabung sind die Profilelemente bei einer Temperatur von weniger als 100° C, insbesondere weniger als 50° C zum Bilden der Halteköpfe deformierbar. Das Deformieren kann also bevorzugt eine Kaltumformung sein. Zweckmäßigerweise sind die Profilelemente bei Raumtemperatur deformierbar, wobei unter Raumtemperatur ein Temperaturbereich zwischen 18° C und 25° C, insbesondere ein Temperaturbereich zwischen 19° C und 21 ° C oder 22° C bis 24° C verstanden werden kann. Eine Kaltverformbarkeit verhindert eine thermische Beeinträchtigung des Fasermaterials und ermöglicht somit eine besonders schonende und daher zuverlässige Befestigung.

Erfindungsgemäß können die deformierten Profilelemente das Fasermaterial kraft- und/oder formschlüssig halten. Aber auch eine stoffschlüssige Verbindung zwischen den Profilelementen und dem Fasermaterial ist denkbar, beispielsweise durch Verkleben oder Verschmelzen. Die Profilelemente mit den zu Halteköpfen deformierten Stirnbereichen bilden zweckmäßigerweise eine Nietenform, so dass die erfindungsgemäße Befestigung auch als "Kaltmikrovernieten" bezeichnet werden kann.

Besonders bevorzugt ist es, dass zumindest zwei Profilelemente dieselbe Form, dieselben Abmessungen und/oder dasselbe Material aufweisen, da hierdurch eine gleichförmige Deformation und folglich eine besonders homogene Krafteinleitung in das Fasermaterial ermöglicht wird. Vorzugsweise ist eine Vielzahl von Profilelementen vorgesehen, d.h. insbesondere mindestens 10.

Grundsätzlich könnte eine einseitige Befestigung ausreichend sein. Ein weiterer Erfindungsgedanke liegt jedoch darin, dass ein Deckelement zum Anlegen an die Profilelemente des Grundelementes vorgesehen ist. Das Deckelement, das erfindungsgemäß einen Bestandteil des Befestigungselementes bildet, kann mehrere Aufgaben übernehmen. Zum einen kann es die Befestigungsstelle abdecken und vor schädlichen Umwelteinflüssen schützen, so dass die Zuverlässigkeit und Dichtigkeit der Befestigung weiter erhöht ist. Zusätzlich ist das Deckelement auch zum Deformieren der Profilelemente zum Bilden der Halteköpfe vorgesehen. Das Deckelement bildet somit das zuvor erwähnte Gegenstück. Erfindungsgemäß kann eine besonders einfache Montage des Befestigungselementes gegeben sein, da keine zusätzlichen Werkzeuge zum Deformieren der Profilelemente erforderlich sind.

Zweckmäßigerweise ist das Grundelement und/oder das Deckelement plattenförmig ausgebildet. Im Bereich der Profilelemente, also in dem Bereich, an dem das Fasermaterial angeordnet wird, sind das Grundelement und/oder das Deckelement für eine einfache Montage bevorzugt eben ausgebildet. Grundsätzlich kann das Grundelement und/oder das Deckelement im Bereich der Profilelemente jedoch auch gekrümmt und/oder abgewinkelt ausgebildet sein. Im Bereich der Profilelementen weisen das Grundelement und das Deckelement geeigneterweise eine korrespondierende Form auf.

Erfindungsgemäß vorgesehen ist, dass am Deckelement ebenfalls stiftförmige Profilelemente zum Durchdringen des Fasermaterials vorstehen. Gemäß dieser Ausführungsform kann eine Krafteinleitung in das Fasermaterial sowohl am Grundelement als auch am Deckelement erfolgen. Bei einer solchen zweiseitigen Befestigung wird das Fasermaterial besonders zuverlässig gehalten. Erfindungsgemäß werden das Grundelement und das Deckelement so am Fasermaterial angeordnet, dass die Profilelemente des Grundelements zu den Profilelementen des Deckelements seitlich versetzt sind, wobei unter einem seitlichen Versatz insbesondere ein Versatz quer zur Längsachse der Profilelemente verstanden wird.

Ferner ist vorgesehen, dass die Profilelemente des Deckelementes ebenfalls zum Bilden von Halteköpfen für das Fasermaterial deformierbar sind. Hierdurch wird eine gegenseitige Vernietung des Fasermaterials mit dem Befestigungselement geschaffen, bei der nietenartig umgeformte Profilelemente von beiden gegenüberliegenden Flachseiten des Fasermaterials in das Fasermaterial hineinragen, und/oder bei der die Profilelemente in Form einer Interdigitalstruktur ineinander greifen. Eine solche gegenseitige Vernietung ermöglicht zum einen eine besonders belastbare Befestigung des Fasermaterials. Darüber hinaus stellt eine solche gegenseitige Vernietung auch in besonders einfacher Weise eine Verbindung zwischen dem Grundelement und dem Deckelement zur Verfügung, so dass zusätzliche Haltemittel zum Verbinden von Grundelement und Deckelement entbehrlich sein können. Die Deformation der Profilelemente des Deckelementes erfolgt geeigneterweise ebenfalls in den Stirnbereichen der Profilelemente, das heißt in den Endbereichen der Profilelemente, welche dem Deckelement abgewandt sind.

Die Profilelementen des Deckelementes sind vorzugsweise hinsichtlich ihrer Funktion und/oder Gestaltung analog zu den Profilelementen des Grundelementes ausgebildet. Besonders bevorzugt ist es, dass die Profilelemente des Grundelementes zumindest teilweise dieselbe Form, dieselben Abmessungen und/oder dasselbe Material aufweisen wie die Profilelemente des Deckelementes, da hierdurch ein analoges Deformationsverhalten und folglich eine besonders homogene Krafteinleitung in das Fasermaterial ermöglicht wird. Insbesondere ist es vorteilhaft, dass die Profilelemente des Grundelementes dieselbe Länge aufweisen wie die Profilelemente des Deckelementes, so dass ihre Deformation zeitgleich erfolgt.

Die Profilelemente bilden nach der Erfindung eine pin-artige Struktur am Grundelement und gegebenenfalls auch am Deckelement. Zweckmäßigerweise sind die Profilelemente am Deckelement und/oder am Grundelement in Form eines regelmäßigen Musters angeordnet. Beispielsweise können sie in Form einer oder mehrerer Reihen und/oder in Form eines rechteckigen, insbesondere quadratischen Rasters angeordnet sein. Die Gesamtzahl der Profilelemente und/oder ihre Flächendichte am Grundelement und am Deckelement kann gleich oder auch verschieden sein.

Erfindungsgemäß ist es, dass die Profilelemente durch Verpressen des Grundelementes mit dem Deckelement, insbesondere bei Raumtemperatur, zu den Halteköpfen deformierbar sind. Gemäß dieser Ausführungsform sind die Profilelemente durch axial, das heißt längs der Profilelemente gerichtete Kräfte zu den Halteköpfen deformierbar, wobei die Axialkräfte zwischen Deckelement und Grundelement wirken. Bevorzugt kann ein kurzzeitiges Verpressen ausreichen. Beispielsweise kann vorgesehen sein, die Profilelemente durch Anwenden eines Schlages, beispielsweise eines Hammerschlages, umzuformen, der auf das Grundelement oder das Deckelement einwirkt.

Besonders vorteilhaft ist es, dass das Grundelement und das Deckelement einstückig ausgebildet sind, was eine besonders kostengünstige Fertigung des Befestigungselementes ermöglicht. Auch ist es besonders vorteilhaft, dass die Profilelemente des Deckelementes einstückig mit dem Deckelement und/oder dass die Profilelemente des Grundelementes einstückig mit dem Grundelement ausgebildet sind, was ebenfalls im Hinblick auf die Fertigungskosten günstig ist.

Im Hinblick auf den Herstellungsaufwand ist es weiterhin vorteilhaft, dass das Deckelement, das Grundelement und/oder die Profilelemente des Deckelements und/oder des Grundelementes ein Kunststoffmaterial aufweisen. Bei dem Kunststoffmaterial handelt es sich geeigneterweise um ein thermoplastisches Kunststoffmaterial, was ein gezieltes Aufschmelzen und/oder Verschmelzen des Deckelementes, des Grundelementes und/oder der Profilelemente zur weiteren Verstärkung der Befestigung erlaubt. Das Kunststoffmaterial kann beispielsweise Polyamid, Polypropylen, Polyethylen oder Polyethylenterephthalat, verstärkt oder nicht verstärkt, aufweisen. Das Befestigungselement kann insbesondere ein Spritzgussteil sein.

Eine weitere bevorzugte Ausführungsform der Erfindung besteht darin, dass Haltemittel zum Festlegen des Deckelements am Grundelement vorgesehen sind. Diese Haltemittel ermöglichen es insbesondere, das Deckelement nach dem Eindringen der Profilelemente in das Fasermaterial und vorzugsweise nach dem Deformieren der Profilelemente am Grundelement zu befestigen. Hierdurch wird eine zuverlässige Positionierung des Deckelementes an der Befestigungsstelle ermöglicht. Ferner können die Profilelemente entlastet werden. Die Haltemittel sind geeigneterweise so dimensioniert, dass sie das Deckelement beim Verpressen des Grundelements mit dem Deckelement zum Bilden der Halteköpfe festlegen.

Besonders bevorzugt ist es, dass die Haltemittel zumindest ein Hakenelement aufweisen, das am Grundelement und/oder am Deckelement angeordnet ist. Eine Befestigung mit solchen Hakenelementen ist besonders einfach in den Fertigungsprozess integrierbar. Insbesondere kann am Grundelement zumindest ein erstes Hakenelement und am Deckelement zumindest ein korrespondierendes zweites Hakenelement vorgesehen sein. Das zumindest eine Hakenelement ist vorzugsweise dafür ausgebildet, das Fasermaterial beim Verpressen von Grundelement und Deckelement zu durchdringen. Insbesondere für diesen Zweck kann das zumindest eine Hakenelement spitz zulaufend ausgebildet sein. Vorzugsweise ist das zumindest eine Hakenelement seitlich neben den Profilelementen am Grundelement beziehungsweise am Deckelement angeordnet, insbesondere auf derselben Oberfläche wie die Profilelemente.

Zusätzlich oder alternativ können die Haltemittel auch Verbindungsprofile, z.B. Stifte aufweisen, die am Grundelement und/oder am Deckelement vorstehen, und mittels derer eine stoffschlüssige Verbindung, insbesondere eine Schweißverbindung, zwischen dem Grundelement und dem Deckelement hergestellt werden kann. Auch können die Haltemittel zumindest einen Niet aufweisen, der im festgelegten Zustand das Deckelement und/oder das Grundelement durchdringt. Auch können die Haltemittel externe Klammern aufweisen, die das Deckelement und das Grundelement umgreifen.

Ferner können die Haltemittel zumindest einen Schnappbolzen aufweisen, der am Deckelement oder am Grundelement vorsteht, und der durch eine korrespondierende Ausnehmung am Grundelement beziehungsweise am Deckelement durchführbar ist, wobei der Schnappbolzen beim Durchführen durch die korrespondierende Öffnung endseitig zusammengedrückt wird und nach dem Durchtreten zum Herstellen der Verbindung wieder aufschnappt. Die Haltemittel können auch umgreifende Schnappelemente aufweisen, welche das Deckelement und/oder das Grundelement an ihren Kanten am Grundelement beziehungsweise am Deckelement festlegen.

Besonders vorteilhaft ist es nach der Erfindung, dass das Grundelement und das Deckelement über die Profilelemente miteinander verbindbar, insbesondere verschweißbar und/oder verklebbar sind. Gemäß dieser Ausführungsform kommt den Profilelementen eine Doppelfunktion zu, bei der sie sowohl das Fasermaterial am Befestigungselement als auch das Grundelement und das Deckelement untereinander halten. Bei dieser Ausführungsform sind Haltemittel an den Profilelementen ausgebildet, wobei die Haltemittel vorzugsweise durch eine stoffschlüssige Verbindung gebildet sind. Das Verschweißen kann beispielsweise durch Ultraschallschweißen, Reibschweißen oder Induktionsschweißen erfolgen. Zum Induktionsschweißen weisen die Profilelemente geeigneterweise einen leitfähigen Zusatzstoff auf.

Weiterhin ist es nach der Erfindung besonders bevorzugt, dass zumindest eine Verbindungseinrichtung vorgesehen ist, mit der das Grundelement und das Deckelement relativ zueinander beweglich verbunden sind. Mittels einer solchen Verbindungseinrichtung kann gewährleistet werden, dass Grundelement und Deckelement vor dem Herstellen der Befestigung stets paarweise vorliegen. Beispielsweise kann die Verbindungseinrichtung ein biegbares Element, beispielsweise ein Band, vorzugsweise aus Kunststoff, aufweisen.

Besonders vorteilhaft ist es, dass die Verbindungseinrichtung ein Scharnier aufweist. Ein Scharnier kann in besonders einfacher Weise gewährleisten, dass das Grundelement und das Deckelement mit den Profilelementen während des Anbringens des Befestigungselementes am Fasermaterial eine vorgegebene Relativposition einnehmen. Insbesondere können bei dieser Ausführungsform das Grundelement und das Deckelement über das Scharnier so weit verschwenkt werden, bis die Profilelemente das flächige Fasermaterial durchstochen haben und kopfseitig zu den Halteköpfen verformt sind. Im Hinblick auf den Herstellungsaufwand besonders vorteilhaft ist es, dass das Scharnier ein Filmscharnier ist. Unter einem Filmscharnier kann eine dünnwandige Verbindung, insbesondere in Form eines Falzes, verstanden werden, die durch ihre Biegsamkeit eine Drehbewegung der verbundenen Elemente ermöglicht.

Grundsätzlich kann vorgesehen sein, dass die stiftförmigen Profilelemente über ihrer gesamten Höhe stets denselben Querschnitt aufweisen. Beispielsweise können die Profilelemente zylindrisch ausgebildet sein. Besonders vorteilhaft ist es jedoch, dass die Profilelemente zumindest bereichsweise spitz zulaufend ausgebildet sind, so dass ein besonders einfaches und schonendes Eindringen in das Fasermaterial und Verdrängen des Fasermaterials möglich ist. Unter einer spitz zulaufenden Anordnung wird verstanden, dass sich die Profilelemente zu ihren Stirnbereichen hin verjüngen. Es kann vorgesehen sein, dass ein Querschnittsdurchmesser der Profilelemente kleiner ist als die Maschenweite des Fasermaterials oder zumindest in derselben Größenordnung wie die Maschenweite des Fasermaterials liegt. Hierdurch wird eine übermäßige Beanspruchung des Filtermaterials beim Herstellen der Verbindung vermieden. Insbesondere wenn die Profilelemente das Fasermaterial verdrängen und/oder verschieben, beispielsweise aufgrund ihrer spitz zulaufenden Form, können die Profilelemente auch querschnittsgrößer ausgebildet sein. Die Profilelemente können beispielsweise eine Höhe von etwa 0,5 bis 5 mm, vorzugsweise etwa 0,8 bis 2 mm, insbesondere etwa 1 mm oder 1,6 mm, und einen Durchmesser von etwa 0,05 bis 2 mm, vorzugsweise von etwa 0,1 bis 1,2 mm, insbesondere von etwa 0,65 mm oder 1mm aufweisen. Die Profilelemente sind vorzugsweise starr und steif verglichen mit dem Fasermaterial ausgebildet, so dass es am Übergang Fasermaterial - Profilelement -Fasermaterial zu einem Steifigkeitssprung kommt.

Die Zuverlässigkeit der Verbindung kann dadurch erhöht werden, dass die Halteköpfe durch eine Aufweitung der Profilelemente gebildet werden. Grundsätzlich kann jedoch bereits ein einfaches Umbiegen der Profilelemente ausreichend sein.

Das erfindungsgemäße Befestigungselement kann dazu dienen, das Fasermaterial an einer anderen Komponente, beispielsweise an einem Randverstärkungselement, festzulegen. In diesem Fall kann vorgesehen sein, dass die Profilelemente lediglich einen Abschnitt, insbesondere Randabschnitt, des Fasermaterials durchdringen. Mittels des Befestigungselementes kann aber auch Fasermaterial mit Fasermaterial verbunden werden. Eine bevorzugte Ausführungsform der Erfindung besteht somit darin, dass die Profilelemente zumindest zwei Abschnitte, insbesondere Randabschnitte, des Fasermaterials durchdringen. Je nach Anwendung können die Abschnitte an unterschiedlichen Bahnen des Fasermaterials oder auch an ein und derselben Bahn ausgebildet sein, wobei im letztgenannten Fall mittels des Befestigungselementes schlauchartige Strukturen aus dem Fasermaterial gebildet werden können. Beispielsweise können mittels eines erfindungsgemäßen Befestigungselementes zwei gegenüberliegende Randabschnitte eines Filtermediums miteinander verbunden werden, so dass ein Filterschlauch oder ein Filterstern gebildet wird.

Sofern die Profilelemente mehrere Abschnitte des Fasermaterials durchdringen, können diese Abschnitte nebeneinander angeordnet sein, so dass jedes einzelne Profilelement jeweils nur einen Abschnitt durchdringt. In diesem Fall können die Profilelemente vergleichsweise kurz ausgestaltet werden. Die Abschnitte des Fasermaterials können, beispielsweise für eine besonders dichte Verbindung, jedoch auch übereinander angeordnet sein, so dass zumindest einige der Profilelemente mehrere Abschnitte durchdringen und die Halteköpfe dieser Profilelemente jeweils mehrere Abschnitte sichern.

Das erfindungsgemäße Befestigungselement kann für eine Vielzahl von Anwendungen Verwendung finden, insbesondere in der Filtrationstechnik. Beispielsweise kann es zum Verbinden eines flächigen Fasermaterials mit einem Verschluss, zum Verbinden eines Filtertextils mit einem Barrel Neck, zum Verbinden eines Sicherungsringes mit einem Zentrifugensack und/oder zur Randverstärkung dienen. Das Befestigungselement kann auch an einem Bandfilter angeordnet werden und dort eine vorstehende Förderleiste bilden. Es kann ferner dazu dienen, die beiden Enden eines Bandfilters miteinander zu verbinden. Auch kann ein Befestigungselement wie bereits erläutert zum Herstellen eines Filtersterns oder eines Schlauchfilters verwendet werden. Solche Filtersterne können beispielsweise als Ölfilter, insbesondere für ein Fahrzeuggetriebe, eingesetzt werden. Eine weitere Anwendung kann im Blutfilterbereich liegen.

Die Erfindung umfasst auch ein Verfahren zum Befestigen von flächigem Fasermaterial, bei dem ein Befestigungselement mit einem Grundelement und einem Deckelement vorgesehen wird, wobei am Grundelement und am Deckelement Profilelemente vorstehen, das Fasermaterial auf die Profilelemente des Grundelements aufgelegt wird, das Deckelement auf das Fasermaterial aufgelegt wird, und das Deckelement mit dem Grundelement verpresst wird, wobei die Profilelemente des Grundelements durch das Fasermaterial durchgetrieben werden und die Profilelemente des Grundelements zu Halteköpfen für das Fasermaterial deformiert werden, wobei beim Verpressen des Deckelements mit dem Grundelement auch die Profilelemente des Deckelements durch das Fasermaterial durchgetrieben werden und zu Halteköpfen deformiert werden.

Die Erfindung beinhaltet also unter anderem, dass ein Befestigungselement mit einem Grundelement vorgesehen wird, an dem bevorzugt stiftförmige Profilelemente vorstehen, das Fasermaterial auf die Profilelemente aufgelegt wird, die Profilelemente durch das Fasermaterial durchgetrieben werden, und die Profilelemente deformiert und dabei Halteköpfe für das Fasermaterial gebildet werden. Bei dem im erfindungsgemäßen Verfahren verwendeten Befestigungselement handelt es sich geeigneterweise um ein erfindungsgemäßes Befestigungselement.

Die im Zusammenhang mit dem Befestigungselement beschriebenen Erfindungsaspekte können auch beim efindungsgemäßen Verfahren zum Einsatz kommen, ebenso wie die im Zusammenhang mit dem erfindungsgemäßen Verfahren beschriebenen Aspekte für das erfindungsgemäße Befestigungselement relevant sein können.

Das Durchtreiben und Umformen der Profilelemente erfolgt vorzugsweise in ein und demselben Arbeitsschritt, beispielsweise durch schlagendes Anpressen eines Gegenstückes. Beim Durchtreiben der Profilelemente kann es zu einem Verschieben oder Verdängen der Einzelfäden des Textilmaterials kommen.

Unter Umständen kann auch vorgesehen sein, dass die Profilelemente durch das flächige Fasermaterial durchgeschossen werden, das heißt mit so hoher Geschwindigkeit eingebracht wird, dass das Fasermaterial steif und spröde auf die Belastung reagiert und es zu einer lokalen Unterbrechung der Einzelfäden des Fasermaterials kommt. Hierdurch kann unter Umständen einem Aufwellen des Fasermaterials entgegengewirkt werden. Grundsätzlich kann auch vorgesehen sein, vor dem Durchtreiben der Profilelemente korrespondierende Ausnehmungen im Fasermaterial vorzusehen. Hierfür kann beispielsweise vorab eine symmetrische oder eine asymmetrische Nadel eingebracht werden, welche die Strukturen des Fasermaterials, insbesondere die Gewebemaschen, aufweitet. Auch können Gewebeöffnungen aufgekrallt und somit erweitert werden. Überdies können Ausnehmungen vorab durch Stanzen, durch Ausziehen einzelner Fäden und/oder durch Laserbohren hergestellt werden.

Weiterhin ist vorgesehen, dass ein Deckelement auf das Fasermaterial aufgelegt wird, und dass das Deckelement mit dem Grundelement, vorzugsweise bei Raumtemperatur, verpresst wird, wobei die Profilelemente durch das Fasermaterial durchgetrieben werden und die Profilelemente zu den Halteköpfen deformiert werden. Gemäß dieser Ausführungsform ist zum Befestigen des Fasermaterials kein zusätzliches Gegenstück erforderlich, da seine Funktion von dem Deckelement übernommen wird.

Eine weiterer Erfindungsaspekt besteht darin, dass auch am Deckelement bevorzugt stiftförmige Profilelemente vorstehen, und dass beim Verpressen des Deckelementes mit dem Grundelement auch die Profilelemente des Deckelementes durch Fasermaterial durchgetrieben werden und zu Halteköpfen deformiert werden. Gemäß diesem Aspekt wird eine gegenseitige Vernietung ausgehend sowohl vom Grundelement als auch vom Deckelement erreicht, wobei die Vernietung einerseits das Fasermaterial sichert und andererseits auch das Deckelement mit dem Grundelement verbindet.

Zur weiteren Erhöhung der Zuverlässigkeit der Befestigung kann vorgesehen sein, dass das Grundelement mit dem Deckelement an den Halteköpfen stoffschlüssig verbunden, bevorzugt verschweißt wird. Insbesondere kann ein Ultraschallschweißen vorgesehen sein. Aber auch ein induktives Schweißen ist denkbar, wofür beispielsweise die Profilelemente einen leitfähigen Zusatzstoff enthalten können.

Die Erfindung wird nachfolgend anhand bevorzugter Ausführungsbeispiele näher erläutert, die schematisch in den beiliegenden Zeichnungen dargestellt sind, in denen zeigen:
- Figuren 1 bis 3: ein erstes Ausführungsbeispiel eines erfindungsgemäßen Befestigungselementes in verschiedenen Verfahrensstadien bei der Befestigung an einem flächigen Fasermaterial in Schnittansicht;
- Fig. 4: das Befestigungselement der Figuren 1 bis 3 bei unterschiedlicher Anordnung des flächigen Fasermaterials in Schnittansicht;
- Fig. 5: das Befestigungselement der Figuren 1 bis 4 bei unterschiedlicher Anordnung des flächigen Fasermaterials in Schnittansicht;
- Figuren 6 und 7: ein weiteres Ausführungsbeispiel eines erfindungsgemäßen Befestigungselementes in verschiedenen Verfahrensstadien bei der Befestigung an einem flächigen Fasermaterial in Schnittansicht;
- Fig. 8: ein weiteres Ausführungsbeispiel eines erfindungsgemäßen Befestigungselementes in perspektivischer Ansicht;
- Fig. 9: ein weiteres Ausführungsbeispiel eines erfindungsgemäßen Befestigungselementes in perspektivischer Ansicht;
- Fig. 10: ein weiteres Ausführungsbeispiel eines erfindungsgemäßen Befestigungselementes in perspektivischer Ansicht nach der Montage, wobei das flächige Fasermaterial der Übersichtlichkeit halber nicht dargestellt ist;
- Fig. 11: ein Anwendungsbeispiel eines Befestigungselementes an einem plissierten Filterstern in perspektivischer Ansicht; und
- Figuren 12 bis 18: jeweils ein weiteres Ausführungsbeispiel eines erfindungsgemäßen Befestigungselementes in Schnittansicht.

Gleich oder ähnlich wirkende Elemente sind in allen Figuren mit denselben Bezugszeichen gekennzeichnet.

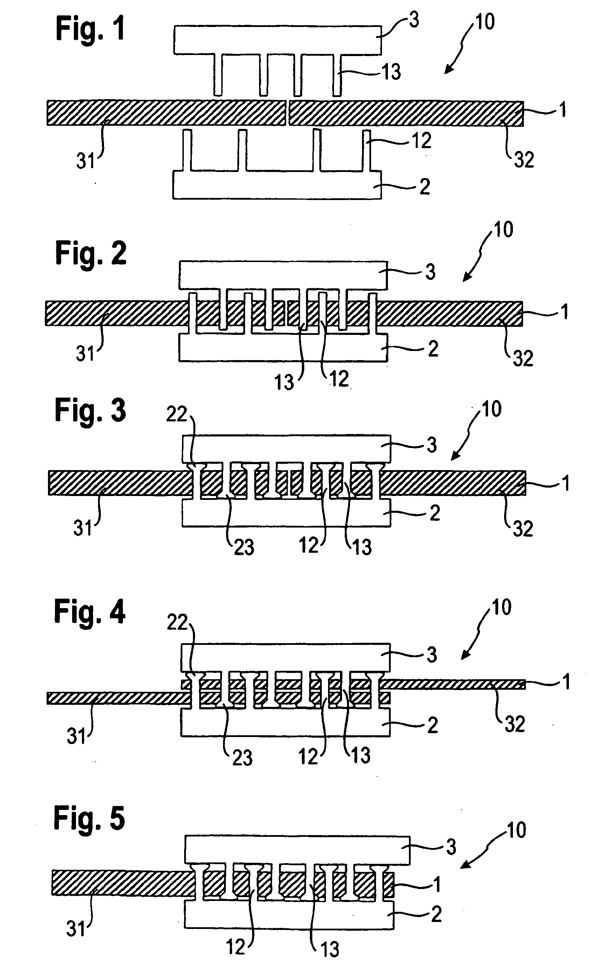

Ein erstes Ausführungsbeispiel eines erfindungsgemäßen Befestigungselementes 10 in verschiedenen Verfahrensstadien der Befestigung ist in den Figuren 1 bis 3 dargestellt. Das Befestigungselement 10 weist ein plattenförmiges Grundelement 2 auf, an dem auf einer bevorzugt rechteckigen Flachseite parallel verlaufende, stiftförmige Profilelemente 12 rechtwinklig vorstehen. Das Befestigungselement 10 weist ferner ein Deckelement 3 auf, an dem auf einer bevorzugt rechteckigen Flachseite ebenfalls parallel verlaufende, stiftförmige Profilelemente 13 rechtwinklig vorstehen. Die Profilelemente 12 sind einstückig mit dem Grundelement 2 ausgebildet. Ebenso sind die Profilelemente 13 einstückig mit dem Deckelement 3 ausgebildet. Grundelement 2, Deckelement 3 sowie die Profilelemente 12 und 13 bestehen zweckmäßigerweise auf einem thermoplastischen Kunststoffmaterial.

Die Flachseiten der Elementen 2, 3, an denen die Profilelemente 12, 13 angeordnet sind, sind vorzugsweise gleich groß. Die Profilelemente 12 des Grundelementes 2 weisen dieselbe Länge wie die Profilelemente 13 des Deckelementes 3 und insbesondere auch dieselbe Form auf. Beim dargestellten Ausführungsbeispiel sind die Profilelemente 12, 13 zylindrisch ausgebildet.

Die Montage des Befestigungselementes 10 an einem flächigen Fasermaterial 1 in einem erfindungsgemäßen Verfahren ist in den Figuren 1 bis 3 erläutert. Wie Fig. 1 zeigt, wird zunächst das Grundelement 2 an einer Flachseite des flächigen Fasermaterials 1 und das Deckelement 3 an der gegenüberliegenden Flachseite des flächigen Fasermaterials 1 so angeordnet, dass sowohl die Profilelemente 12 als auch die Profilelemente 13 parallel zueinander verlaufen und zum Fasermaterial 1 hinweisen. Das Grundelement 2 und das Deckelement 3 werden dabei so positioniert, dass die Profilelemente 12 lateral versetzt zu den Profilelemente 13 sind und beim Verpressen von Grundelement 2 und Deckelement 3 ineinandergreifen können.

Wie Fig. 2 zeigt, werden das Grundelement 2 und das Deckelement 3 sodann miteinander verpresst, wobei das Verpressen beispielsweise durch einen Schlag auf das Deckelement 3 bewirkt werden kann. Hierbei dringen die Profilelemente 12 und 13 in das zwischen den Elementen 2 und 3 liegende Fasermaterial 1, das insbesondere ein Gewebe sein kann, ein. Beim Eindringen der Profilelemente 12 und 13 in das flächige Fasermaterial 1 können Fäden, insbesondere Kett- und Schussfäden, des Fasermaterials 1 losgerissen werden und den eindringenden Profilelementen 12, 13 ausweichen. Insbesondere bei höheren Eindringgeschwindigkeiten können die Profilelemente 12, 13 Fäden des Fasermaterials 1 beim Eindringen auch durchtrennen.

Im Laufe des Verpressvorganges treffen die Profilelemente 12 des Grundelementes 2 stirnseitig, das heißt an ihren dem Grundelement 2 abgewandten Enden, am Deckelement 3 auf. Gleichzeitig treffen die Profilelemente 13 des Deckelementes 3 stirnseitig, das heißt an ihren dem Deckelement 3 abgewandten Seiten, am Grundelement 2 auf. Beim weiteren Verpressen kommt es daher zu einer Verformung der Profilelemente 12 und 13 in ihren Stirnbereichen, wie in Fig. 3 dargestellt ist. Hierdurch bilden sich in den Kopfbereichen der Profilelemente 12 und 13 Halteköpfe 22 beziehungsweise 23 aus. Die Halteköpfe 22 und 23 können wie in Fig. 3 dargestellt durch eine Aufweitungen gebildet sein. Grundsätzlich kann aber auch eine einfache Verbiegung der Profilelemente 12 beziehungsweise 13 ausreichend sein.

Die Profilelemente 12, 13 sichern das durchdrungene flächige Fasermaterial 1 formschlüssig gegen eine seitliche Bewegung. Durch die Halteköpfe 22, 23 sind Mikronieten gebildet, welche das Fasermaterial 1 gegen ein axiales Herunterrutschen von den Profilelemente 12, 13 sichern. Die von gegenüberliegenden Seiten aus eindringenden Profilelemente 12 und 13 bilden mit ihren Halteköpfe 22 beziehungsweise 23 überdies eine gegenseitige Verhakung, welche das Deckelement 3 über das Fasermaterial 1 mit dem Grundelement 2 zusammenhält.

Zur weiteren Verbesserung der Befestigung kann vorgesehen sein, das Grundelement 2 und das Deckelement 3 an den Halteköpfen 22 und/oder 23 miteinander zu verschweißen. Um die Haltekräfte weiter zu erhöhen, kann auch vorgesehen sein, die Profilelemente 12 und/oder 13 nach dem Eindringen in das Fasermaterial 1 im Bereich des durchdrungenen Fasermaterials 1 aufzuschmelzen, beispielsweise induktiv oder durch Ultraschalleinwirkung. Insbesondere kann das Aufschmelzen so durchgeführt werden, dass im Anschluss die Fäden des Fasermaterials von der Schmelze umfasst werden, wodurch ein besonders guter Halt des Fasermaterials erzielt wird. Grundsätzlich kann auch vorgesehen sein, die Fäden des Fasermaterials mit den Profilelementen 12, 13 zu verschmelzen oder zu verkleben, so dass eine stoffschlüssige Verbindung gegeben ist.

Beim Ausführungsbeispiel der Figuren 1 bis 3 wird das Befestigungselement 10 zum Verbinden zweier Abschnitte 31 und 32 des Fasermaterials 1 miteinander verwendet. Bei diesen beiden Abschnitten 31 und 32 kann es sich insbesondere um Randabschnitte derselben Textilbahn oder verschiedener Textilbahnen handeln. Beim Ausführungsbeispiel der Figuren 1 und 3 werden die zu verbindenden Abschnitte 31, 32 im Befestigungselement 10 nebeneinander angeordnet, so dass sich diese weder vor noch nach dem Fixieren des Befestigungselementes 10 überlappen. Demgemäß durchdringt jedes der Profilelemente 12 und 13 jeweils immer nur einen Abschnitt, nämlich entweder den Abschnitt 31 oder den Abschnitt 32.

Beim Ausführungsbeispiel der Fig. 4 wird das Befestigungselement 10 ebenfalls zum Verbinden zweier Abschnitte 31 und 32 des Fasermaterials 1 eingesetzt. Beim Ausführungsbeispiel der Fig. 4 werden die Abschnitte 31 und 32 im Befestigungselement 10 jedoch übereinander angeordnet, so dass sich diese zumindest bereichsweise überlappen. Zumindest einige der Profilelemente 12 oder 13 durchdringen somit beide Abschnitte 31 und 32.

Beim Ausführungsbeispiel der Fig. 5 ist am Befestigungselement 10 lediglich ein einziger Abschnitt 31 des Textilmaterials 1 befestigt. In dieser Ausgestaltung kann das Befestigungselement 10 beispielsweise als Randverstärkung für den Abschnitt 31 eingesetzt werden.

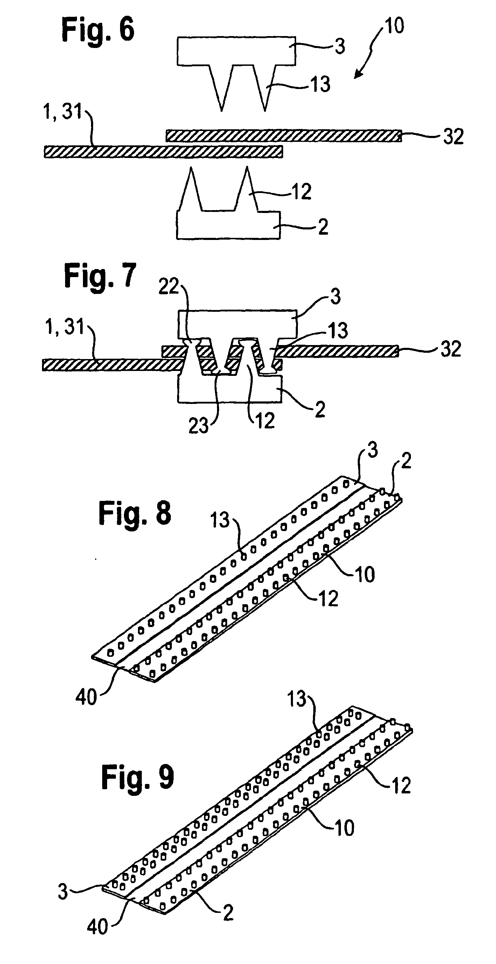

Ein weiteres Ausführungsbeispiel eines erfindungsgemäßen Befestigungselementes 10 ist vor dem Befestigen in Fig. 6 und nach dem Befestigen in Fig. 7 dargestellt. Im Gegensatz zu den vorgenannten Ausführungsbeispielen sind beim Ausführungsbeispiel der Figuren 6 und 7 die Profilelemente 12 und 13 nicht zylindrisch sondern spitz zulaufend ausgebildet, das heißt sie verjüngen sich konisch zu ihren Stirnbereichen hin.

Ein weiteres Ausführungsbeispiel eines Befestigungselementes 10 ist in Fig. 8 dargestellt. Beim Ausführungsbeispiel der Fig. 8 sind das quaderförmige Grundelement 2 und das quaderförmige Deckelement 3 über ein längs der langen Quaderseiten verlaufendes Filmscharnier 40 miteinander verbunden. Das Filmscharnier 40 stellt einerseits sicher, dass vor dem Montieren des Befestigungselementes 10 das Grundelement 2 und das Deckelement 3 stets gepaart vorliegen. Andererseits gewährleistet das Filmscharnier 40, dass beim Montieren, das heißt beim Umbiegen des Befestigungselementes 10 um das Filmscharnier 40, die Profilelemente 12 und 13 in einer definierten Position zu liegen kommen, bei der die Profilelemente 12 zu den Profilelementen 13 lateral versetzt sind.

Beim Ausführungsbeispiel der Fig. 8 sind am Grundelement 2 zwei parallel verlaufende Reihen mit Profilelementen 12 vorgesehen. Am Deckelement 3 ist lediglich eine einzige Reihe mit Profilelementen 13 vorgesehen, welche parallel zu den beiden Profilelementreihen des Grundelementes 2 verläuft. Die Profilelementreihen von Deckelement 3 und Grundelement 2 verlaufen dabei parallel zum Filmscharnier 40 und parallel zur langen Quaderseite der Elemente 2 und/oder 3. Beim Umbiegen der beiden Elemente 2 und 3 um das Filmscharnier 40 kommen beim Ausführungsbeispiel der Fig. 8 die Profilelemente 13 des Deckelementes 3 zwischen den beiden Profilelementreihen der Profilelemente 12 des Grundelementes 2 zu liegen.

Das Ausführungsbeispiel der Fig. 9 unterscheidet sich vom Ausführungsbeispiel der Fig. 8 dadurch, dass auch am Deckelement 3 zwei parallel verlaufende Reihen von Profilelementen 13 vorgesehen sind. Beim Umbiegen von Grundelement 2 und Deckelement 3 um das Filmscharnier 40 kommen beide Reihen der Profilelemente 13 des Deckelementes 3 zwischen den beiden Reihen der Profilelemente 12 des Grundelementes 2 zu liegen.

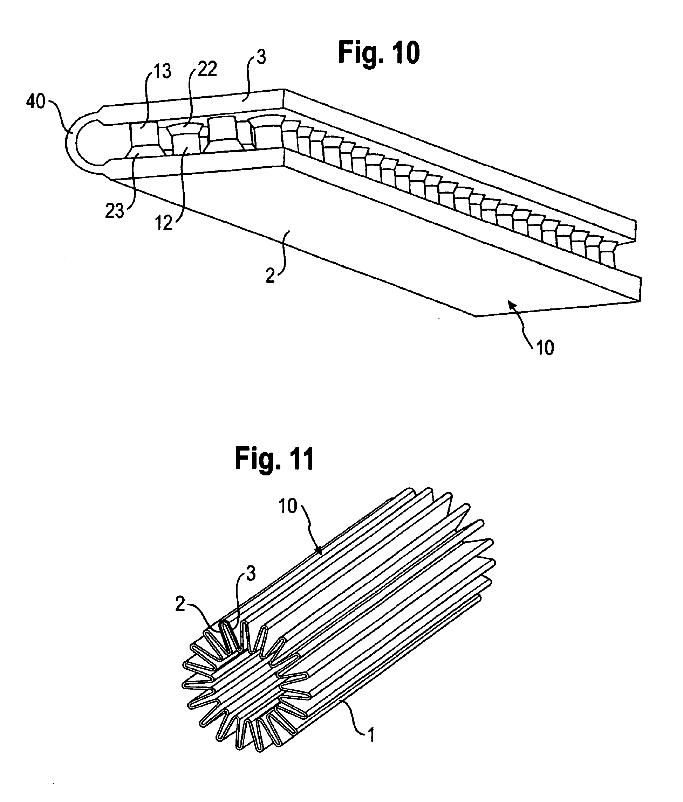

Fig. 10 zeigt ein weiteres Ausführungsbeispiel eines erfindungsgemäßen Befestigungselementes 10 mit einem Filmscharnier 40 im Zustand nach dem Umbiegen um das Filmscharnier 40 und dem Deformieren der Profilelemente 12, 13, wobei der Übersichtlichkeit halber in Fig. 10 das Fasermaterial 1 nicht dargestellt ist. Beim Ausführungsbeispiel der Fig. 10 sind am quaderförmigen Grundelement 2 zwei parallel verlaufende Reihen mit Profilelementen 12 vorgesehen, und am quaderförmigen Deckelement 3 ebenfalls zwei parallel verlaufende Reihen Profilelemente 13, wobei im Fall des Ausführungsbeispiels der Fig. 10 beim montierten Befestigungselement 10 die Reihen der Profilelemente 12 alternierend mit den Reihen der Profilelemente 13 angeordnet sind.

Fig. 11 zeigt eine Anwendung des Befestigungselementes der Fig. 10 zur Herstellung eines plissierten Filtersterns. Bei der Herstellung werden Grundelement 2 und Deckelement 3 zunächst ein Stück um das Filmscharnier 40 herum gebogen. Sodann werden die beiden längsseitigen Randbereiche des Fasermaterials 1 des Filtersterns zwischen Grundelement 2 und Deckelement 3 platziert. Bei dem flächigen Fasermaterial 1 kann es sich beispielsweise um ein Glasvlies handeln, das auch ein Stützgewebe, insbesondere ein Kunststoffstützgewebe, aufweisen kann. Anschließend werden Grundelement 2 und Deckelement 3 durch Zusammenpressen miteinander kalt vernietet. Hierbei werden die Randbereiche des Fasermaterials 1 verbunden und der Filterstern längsseitig geschlossen. Optional kann anschließend ein zusätzliches Fixieren von Grundelement 2 und Deckelement 3 durch Verschweißung, insbesondere Ultraschallverschweißung, vorgesehen werden. Die auf diese Weise hergestellten plissierten Filtersterne können beispielsweise als Nebenstromölfilter, insbesondere für Ölfilterpatronen, Verwendung finden.

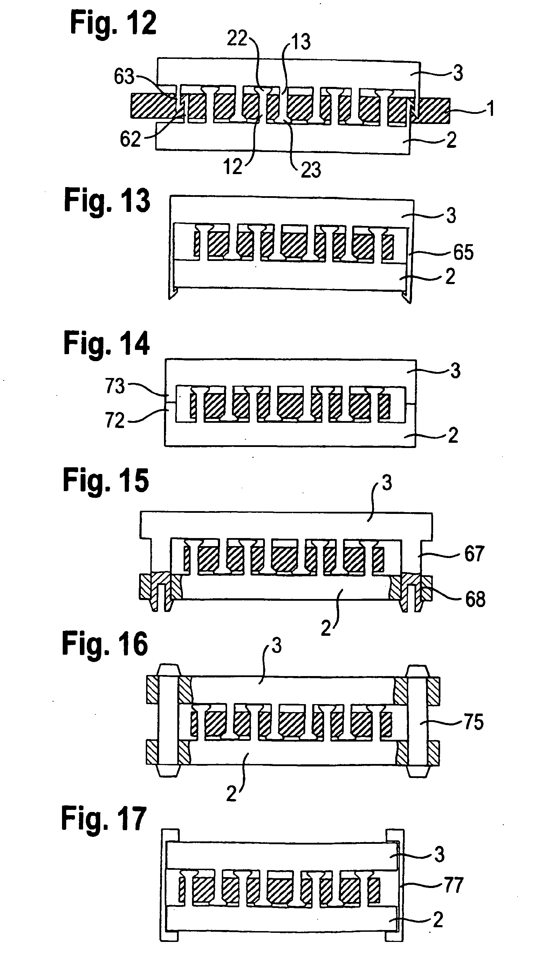

Die Ausführungsbeispiele der Figuren 12 bis 17 entsprechen im Wesentlichen den Ausführungsbeispielen der Figuren 1 bis 5, wobei gemäß Figuren 12 bis 17 zusätzliche Haltemittel zum Festlegen des Deckelementes 3 am Grundelement 2 im montierten Zustand des Befestigungselementes 10 vorgesehen sind.

Beim Ausführungsbeispiel der Fig. 12 sind am Grundelement 2 und am Deckelement 3 miteinander korrespondierende Hakenelemente 62 beziehungsweise 63 vorgesehen, die neben den Profilelementen 22 beziehungsweise 23 rechtwinklig vom Grundelement 2 beziehungsweise vom Deckelement 3 vorstehen, und die im montierten Zustand vorzugsweise das Fasermaterial 1 durchdringen. Hierzu weisen die Hakenelemente 62, 63 eine spitz zulaufende Widerhakenform auf, die einen Durchtritt durch die Fäden des Fasermaterials 1 erlaubt. Die Abmessungen der Hakenelemente 62, 63 liegen zweckmäßigerweise in derselben Größenordnung wie die der Profilelemente 12, 13.

Beim Ausführungsbeispiel der Fig. 13 ist eine umgreifende Schnappverbindung vorgesehen, bei der Schnappelemente 65 am Deckelement 3 das gegenüberliegende Grundelement 2 umgreifen, das heißt das Grundelement 2 an seinen Randkanten halten. Zusätzlich oder alternativ könnten solche umgreifenden Schnappelemente auch am Grundelement 2 vorgesehen sein und dann das Deckelement 3 umgreifen.

Beim Ausführungsbeispiel der Fig. 14 sind das Grundelement 2 und das Deckelement 3 über zusätzliche Verbindungsprofile miteinander stoffschlüssig verbunden, die am Grundelement 2 und/oder Deckelement 3 vorgesehen sind. Diese Verbindungsprofile sind im dargestellten Ausführungsbeispiel durch Stifte 72 und 73 gebildet, die am Grundelement 2 beziehungsweise am Deckelement 3 vorstehen. Die Stifte 72 und 73 sind miteinander verschweißt. Alternativ oder zusätzlich zu einem Verschweißen kann auch ein Verkleben vorgesehen sein.

Beim Ausführungsbeispiel der Fig. 15 sind am Deckelement 3 Schnappstifte 67 vorgesehen, die durch Ausnehmungen 68 am Grundelement 2 hindurchragen. Alternativ oder zusätzlich könnten Schnappstifte auch am Grundelement 2 und korrespondierende Ausnehmungen am Deckelement 3 vorgesehen sein. Die Schnappstifte 67 haben einen flexiblen Kopf, der sich beim Einschieben in die Ausnehmung 68 verformt und somit einen Durchtritt durch die Ausnehmung 68 gestattet. Nach dem Durchtritt nimmt der widerhakenartige Kopf wieder seine ursprüngliche Form ein, in der er ein anschließendes Herausziehen des Schnappstiftes 67 sperrt.

Beim Ausführungsbeispiel der Fig. 16 sind Grundelement 2 und Deckelement 3 über Nieten 75 miteinander verbunden.

Beim Ausführungsbeispiel der Fig. 17 sind externe U-förmige Klammern 77 vorgesehen, die das Grundelement 2 und das Deckelement 3 randseitig umgreifen und miteinander verbinden.

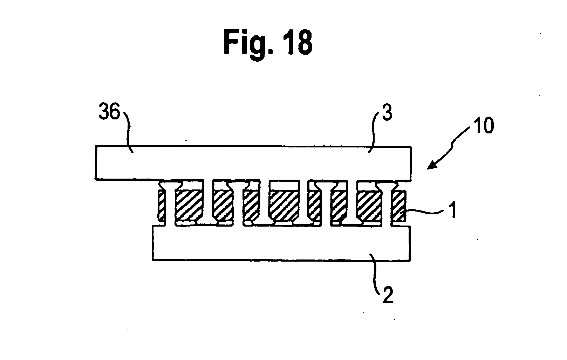

Auch das Ausführungsbeispiel der Fig. 18 entspricht im Wesentlichen den Ausführungsbeispielen der Figuren 1 bis 5. Gemäß Fig. 18 weist das Deckelement 3 im montierten Zustand des Befestigungselementes 10 einen Überstand 36 zum Grundelement 2 auf und kann somit bevorzugt als Anbindeleiste dienen. Zum Bilden des Überstands 36 ist vorzugsweise das Deckelement 3 etwas länger als das Grundelement 2. Der Überstand kann wie in Figur 18 gezeigt linksseitig, aber auch rechtsseitig oder beidseitig vorgesehen sein.

## Patentansprüche

1. Befestigungselement (10) für flächiges Fasermaterial (1), mit
- einem Grundelement (2),
- stiftförmigen Profilelementen (12), die zum Durchdringen des Fasermaterials (1) an dem Grundelement (2) vorstehen, und
- einem Deckelement (3), welches zum Anlegen an die Profilelemente (12) des Grundelements (2) vorgesehen ist,
- wobei an dem Deckelement (3) ebenfalls stiftförmige Profilelemente (13) zum Durchdringen des Fasermaterials (1) vorstehen,
**dadurch gekennzeichnet,**
- **dass** die Profilelemente (12) des Grundelements (2) und die Profilelemente (13) des Deckelements (3) zum Bilden von Halteköpfen (22, 23) für das Fasermaterial (1) deformierbar sind,
- wobei die Profilelemente (12) des Grundelements (2) und die Profilelemente (13) des Deckelements (3) durch Verpressen des Grundelements (2) mit dem Deckelement (3) zu den Halteköpfen (22, 23) deformierbar sind.

2. Befestigungselement (10) nach Anspruch 1,
**dadurch gekennzeichnet,**
**dass** die Profilelemente (12, 13) durch Verpressen des Grundelementes (2) mit dem Deckelement (3) bei Raumtemperatur zu den Halteköpfen (22, 23) deformierbar sind.

3. Befestigungselement (10) nach einem der vorstehenden Ansprüche,
**dadurch gekennzeichnet,**
**dass** das Deckelement (3) und das Grundelement (2) einstückig ausgebildet sind, und
**dass** das Deckelement (3), das Grundelement (2) und/oder die Profilelemente (12, 13) ein Kunststoffmaterial aufweisen.

4. Befestigungselement (10) nach einem der vorstehenden Ansprüche,
**dadurch gekennzeichnet,**
**dass** Haltemittel zum Festlegen des Deckelements (3) am Grundelement (2) vorgesehen sind, wobei die Haltemittel zumindest ein Hakenelement (62, 63) aufweisen, das am Grundelement (2) und/oder am Deckelement (3) angeordnet ist.

5. Befestigungselement (10) nach einem der vorstehenden Ansprüche,
**dadurch gekennzeichnet,**
**dass** das Grundelement (2) und das Deckelement (3) über die Profilelemente (12, 13) miteinander verbindbar, insbesondere verschweißbar sind.

6. Befestigungselement (10) nach einem der vorstehenden Ansprüche,
**dadurch gekennzeichnet,**
**dass** zumindest eine Verbindungseinrichtung vorgesehen ist, mit der das Grundelement (2) und das Deckelement (3) relativ zueinander beweglich verbunden sind, und
**dass** die Verbindungseinrichtung ein Scharnier, insbesondere ein Filmscharnier (40), aufweist.

7. Befestigungselement (10) nach einem der vorstehenden Ansprüche,
**dadurch gekennzeichnet,**
**dass** die Profilelemente (12, 13) zumindest bereichsweise spitz zulaufend ausgebildet sind, und
**dass** die Halteköpfe (22, 23) durch eine Aufweitung der Profilelemente (12, 13) gebildet werden.

8. Befestigungselement (10) nach einem der vorstehenden Ansprüche,
**dadurch gekennzeichnet,**
**dass** die Profilelemente (12, 13) zumindest zwei Abschnitte (31, 32) des Fasermaterials (1) durchdringen, wobei die Abschnitte (31, 32) nebeneinander oder übereinander angeordnet sind.

9. Verfahren zum Befestigen von flächigem Fasermaterial (1), bei dem
- ein Befestigungselement (10) mit einem Grundelement (2) und einem Deckelement (3) vorgesehen wird, wobei am Grundelement (2) und am Deckelement (3) Profilelemente (12, 13) vorstehen,
- das Fasermaterial (1) auf die Profilelemente (12) des Grundelements (2) aufgelegt wird,
- das Deckelement (3) auf das Fasermaterial (1) aufgelegt wird, und
- das Deckelement (3) mit dem Grundelement (2) verpresst wird, wobei die Profilelemente (12) des Grundelements (2) durch das Fasermaterial (1) durchgetrieben werden und die Profilelemente (12) des Grundelements (2) zu Halteköpfen (22) für das Fasermaterial (1) deformiert werden,
- wobei beim Verpressen des Deckelements (3) mit dem Grundelement (2) auch die Profilelemente (13) des Deckelements (3) durch das Fasermaterial (1) durchgetrieben werden und zu Halteköpfen (23) deformiert werden.

10. Verfahren nach Anspruch 9,
**dadurch gekennzeichnet,**
**dass** das Deckelement (3) bei Raumtemperatur mit dem Grundelement (2) verpresst wird.

11. Verfahren nach einem der Ansprüche 9 oder 10,
**dadurch gekennzeichnet,**
**dass** das Grundelement (2) mit dem Deckelement (3) an den Halteköpfen (22, 23) verschweißt wird.

## Claims

1. Fastening element (10) for flat fibre material (1) comprising
- a basic element (2)
- pin-shaped profile elements (12), which protrude from the basic element (2) in order to penetrate the fibre material (1), and
- a cover element (3) which is provided for placing on the profile elements (12) of the basic element (2).
- wherein pin-shaped profile elements (13) protrude from the cover element (3) in order to penetrate the fibre material (1)
**characterized in**
- **that** the profile elements (12) of the basic element (2) and the profile elements (13) of the cover element (3) can be deformed in order to form retaining heads (22, 23) for the fibre material (1),
- wherein the profile elements of the basic element (2) and the profile elements (13) of the cover element (3) can be deformed in order to form retaining heads (22, 23) by pressing the basic element (2) together with the cover element (3).

2. Fastening element (10) according claim 1,
**characterized in that**
the profile elements (12, 13) can be deformed into the retaining heads (22, 23) by pressing the basic element (2) together with the cover element (3) at room temperature.

3. Fastening element (10) according to any one of the preceding claims,
**characterized in**
**that** the cover element (3) and the basic element (2) are designed integrally and
**that** the cover element (3), the basic element (2) and/or the profile elements (12, 13) comprise a plastic material.

4. Fastening element (10) according to any one of the preceding claims,
**characterized in that**
retaining means for fixing the cover element (3) on the basic element (2) are provided, the retaining means having at least one hook element (62, 63) which is arranged on the basic element (2) and/or on the cover element (3).

5. Fastening element (10) according to any one of the preceding claims,
**characterized in that**
the basic element (2) and the cover element (3) can be connected to each other, in particular welded to each other by means of the profile elements (12, 13).

6. Fastening element (10) according to any one of the preceding claims,
**characterized in**
**that** at least one connecting device is provided, with which the basic element (2) and the cover element (3) are connected in a movable manner relative to each other, and
**that** the connecting device has a hinge, in particular an integral hinge (40).

7. Fastening element (10) according to any one of the preceding claims,
**characterized in**
**that** the profile elements (12, 13) are designed at least in portions by tapering to a point, and
**that** the retaining heads (22, 23) are formed through a widening of the profile elements(12, 13).

8. Fastening element (10) according to any one of the preceding claims,
**characterized in that**
the profile elements (12, 13) penetrate at least two sections (31, 32) of the fibre material (1), the sections (31, 32) being arranged next to or on top of each other.

9. Method for fastening flat fibre material (1), in which
- a fastening element (10) having a basic element (2) and a cover element (3) is provided, wherein from the basic element (2) and cover element (3) profile elements (12, 13) protrude,
- the fibre material (1) is placed onto the profile elements (12) of the basic element (2),
- the cover element (3) is placed onto the fibre material (1), and
- the cover element (3) is pressed together with the basic element (2), wherein the profile elements (12) are driven through the fibre material (1), and the profile elements (12) are deformed into the retaining heads (22) for the fibre material (1)
- whereby also the profile elements (13) of the cover element are driven through the fibre material (1) and are deformed into the retaining heads (23) during the pressing together of the cover element (3) with the basic element (2).

10. Method according claims 9,
**characterized in that**
the cover element (3) is pressed together with the basic element (2) at room temperature.

11. Method according to any one of the claims 9 or 10,
**characterized in that**
the basic element (2) is welded with the cover element (3) on the retaining heads (22, 23).

## Revendications

1. Élément de fixation (10) pour un matériau fibreux plat (1), avec
- un élément de base (2),
- des éléments profilés (12) en forme d'ergots, qui forment saillie sur l'élément de base (2) pour traverser le matériau fibreux (1), et
- un élément de recouvrement (3) qui est prévu pour se poser sur les éléments profilés (12) de l'élément de base (2),
- des éléments profilés (13) en forme d'ergots formant également saillie sur l'élément de recouvrement (3) pour traverser le matériau fibreux (1),
***caractérisé***
- ***en ce que*** les éléments profilés (12) de l'élément de base (2) et les éléments profilés (13) de l'élément de recouvrement (3) sont déformables pour former des têtes de maintien (22, 23) pour le matériau fibreux (1),
- dans lequel les éléments profilés (12) de l'élément de base (2) et les éléments profilés (13) de l'élément de recouvrement (3) sont déformables en têtes de maintien (22, 23) par pressage de l'élément de base (2) avec l'élément de recouvrement (3).

2. Élément de fixation (10) selon la revendication 1, ***caractérisé en ce que*** les éléments profilés (12, 13) sont déformables en têtes de maintien (22, 23) à la température ambiante par pressage de l'élément de base (2) avec l'élément de recouvrement (3).

3. Élément de fixation (10) selon l'une quelconque des revendications précédentes,
***caractérisé***
***en ce que*** l'élément de recouvrement (3) et l'élément de base (2) sont réalisés d'un seul tenant, et
***en ce que*** l'élément de recouvrement (3), l'élément de base (2) et/ou les éléments profilés (12, 13) comprennent une matière plastique.

4. Élément de fixation (10) selon l'une quelconque des revendications précédentes, ***caractérisé en ce que*** des moyens d'arrêt sont prévus pour immobiliser l'élément de recouvrement (3) sur l'élément de base (2), les moyens d'arrêt comprenant au moins un élément formant crochet (62, 63), qui est placé sur l'élément de base (2) et/ou sur l'élément de recouvrement (3).

5. Élément de fixation (10) selon l'une quelconque des revendications précédentes, ***caractérisé en ce que*** l'élément de base (2) et l'élément de recouvrement (3) peuvent être reliés entre eux, en particulier soudés, par l'intermédiaire des éléments profilés (12, 13).

6. Élément de fixation (10) selon l'une quelconque des revendications précédentes,
***caractérisé***
***en ce qu*'**au moins un dispositif de jonction est prévu, avec lequel l'élément de base (2) et l'élément de recouvrement (3) sont reliés de manière mobile l'un par rapport à l'autre, et
*en ce que* le dispositif de jonction comprend une charnière, en particulier une charnière-film (40).

7. Élément de fixation (10) selon l'une quelconque des revendications précédentes,
***caractérisé***
***en ce que*** les éléments profilés (12, 13) sont conformés au moins localement pointus, et
***en ce que*** les têtes de maintien (22, 23) sont formées par un élargissement des éléments profilés (12, 13).

8. Élément de fixation (10) selon l'une quelconque des revendications précédentes, ***caractérisé en ce que*** les éléments profilés (12, 13) traversent au moins deux sections (31, 32) du matériau fibreux, les sections (31, 32) étant placées l'une à côté de l'autre ou l'une au-dessus de l'autre.

9. Procédé pour fixer un matériau fibreux plat (1), dans lequel
- un élément de fixation (10) avec un élément de base (2) et un élément de recouvrement (3) est prévu, des éléments profilés (12, 13) formant saillie sur l'élément de base (2) et sur l'élément de recouvrement (3),
- le matériau fibreux (1) est posé sur les éléments profilés (12) de l'élément de base (2),
- l'élément de recouvrement (3) est posé sur le matériau fibreux (1), et
- l'élément de recouvrement (3) est pressé avec l'élément de base (2), les éléments profilés (12) de l'élément de base (2) étant enfoncés à travers le matériau fibreux (1) et les éléments profilés (12) de l'élément de base (2) étant déformés en têtes de maintien (22) pour le matériau fibreux (1),
- dans lequel, lors du pressage de l'élément de recouvrement (3) avec l'élément de base (2), les éléments profilés (13) de l'élément de recouvrement (3) sont enfoncés à travers le matériau fibreux (1) et déformés en têtes de maintien (23).

10. Procédé selon la revendication 9, ***caractérisé en ce que*** l'élément de recouvrement (3) est pressé avec l'élément de base (2) à température ambiante.

11. Procédé selon l'une quelconque des revendications 9 ou 10, ***caractérisé en ce que*** l'élément de base (2) est soudé avec l'élément de recouvrement (3) au niveau des têtes de maintien (22, 23).
